# EUROPEAN PATENT APPLICATION

(11) **EP 1 677 466 A1**
(43) Date of publication of application: **05.07.2006**
(21) Application number: 04819453.4
(22) Date of filing: 26.11.2004
(51) Int. Cl.: H04L 12/56, H04L 12/28, H04B 7/26

(54) **COMMUNICATION HANDOVER METHOD, COMMUNICATION MESSAGE PROCESSING METHOD, PROGRAM FOR EXECUTING THESE METHODS BY USE OF COMPUTER, AND COMMUNICATION SYSTEM**

(30) Priority: 28.11.2003 JP 2003400388
(71) Applicant: MATSUSHITA ELECTRIC INDUSTRIAL CO., LTD., Kadoma-shi, Osaka 571-8501 (JP)
(72) Inventor: HORI, Takako, Matsushita Electric Ind. Co.,Ltd., Chuo-ku, Osaka-shi, Osaka 540-6319 (JP)
(74) Representative: Hössle, Markus
(86) International application number: PCT/JP2004/017608
(87) International publication number: WO 2005/053250

(57) **Abstract**

Disclosed is a technique which enables a mobile node to promptly and continuously get an additional service (e.g., QoS guarantee) gotten before handover after the handover. According to the technique, a mobile node (MN 10) has a correspondence relationship between information (link layer address of an AP) on an access point (APs 22, 23, 32 and 33) and information (link layer address of an AR, an IP address of the AR, a network prefix and a prefix length of a subnet 20 and 30 to which the AR belongs, and presence or absence of implementation a mobility supported additional service realization function) on an access router (ARs 21 and 31) having control over the AP, and, by referring to the correspondence relationship, configures an NCoA of a destination subnet. An NCoA is transmitted to the IP address of a handover target AR, and the AR which has received the message checks the NCoA, and starts an establishment process of an additional service relating to the mobile node.

## Description

### TECHNICAL FIELD

The present invention relates to a communication handover method and a communication message processing method, which concern the handover of a mobile terminal (mobile terminal) that performs radio communication, and a program for executing these methods by use of a computer, and a communication system, and more particularly, to a communication handover method and a communication message processing method, which concern the handover of a mobile node that performs radio communication using the mobile IPv6 (Mobile Internet Protocol version 6) protocol that is the next generation Internet protocol, and a program for executing these methods by use of a computer, and a communication system.

### BACKGROUND ART

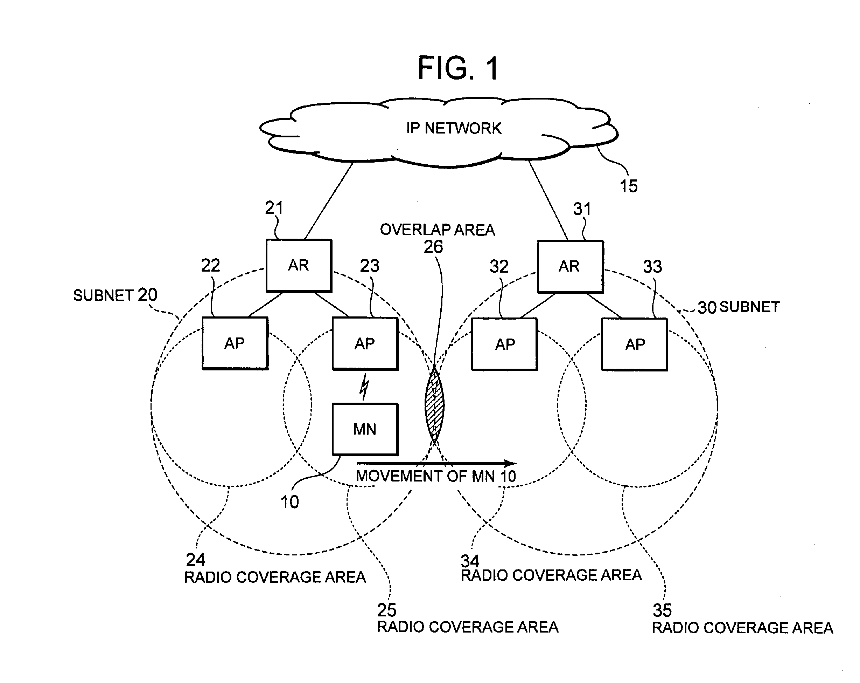

As a technology which provides a user who accesses a communication network like the Internet over a radio network from a mobile node while moving with seamless connection to the communication network, one which uses the mobile IPv6 as the next generation Internet protocol becomes popular. A radio communication system which uses the mobile IPv6 will be explained with reference to FIG. 1. The technology regarding the mobile IPv6 which will be explained below is disclosed in, for example, Non-patent Document 1 described below.

The radio communication system illustrated in FIG. 1 includes an IP network (communication network) 15 like the Internet, a plurality of subnets 20 and 30 (also called sub networks) which are connected to the IP network 15, and a mobile node (MN: Mobile Node) 10 which can be connected to any of the plurality of subnets 20 and 30. In FIG. 1 and two subnets 20 and 30 are illustrated as the plurality of subnets 20 and 30.

The subnet 20 comprises an access router (AR: Access Router) 21 which performs routing of IP packets (packet data), and a plurality of access points (AP: Access Point) 22 and 23 which respectively constitute unique radio coverage areas (communication available areas) 24 and 25. Each of those APs 22 and 23 is connected to the AR 21, which is connected to the IP network 15. In FIG. 1, two APs 22 and 23 are illustrated as the plurality of APs 22 and 23. The subnet 30 is constituted in the same connection mode as that of the subnet 20 by an AR 31, and a plurality of APs 32 and 33.

The AR 21, which is a component of the subnet 20, and the AR 31, which is a component of the subnet 30, can communicate with each other over the IP network 15, i.e., the subnet 20 and the subnet 30 are connected together over the IP network 15.

Suppose that in the radio communication system illustrated in FIG. 1, the MN 10 has started radio communication with the AP 23 in the radio coverage area 25. In this situation, in a case where an IPv6 address assigned to the MN 10 is not adequate for the IP address system of the subnet 20, the MN 10 present in the radio coverage area 25 acquires an IPv6 address adequate for the subnet 20, i.e., a care-of address (CoA: Care of Address) through the radio communication with the AP 23.

Methods for the MN 10 to acquire a CoA include a method by which a DHCP server assigns it in a stateful manner by a technique, such as the DHCPv6 (Dynamic Host Configuration Protocol for IPv6), and a method of acquiring the network prefix and prefix length of the subnet 20 from the AR 21, and combining the network prefix and the prefix length, both obtained from the AR 21, with the link layer address of the MN 10 at the MN 10, thus automatically generating a CoA in a stateless manner.

The MN 10 registers (Binding Update: BU) the acquired CoA at a router (home agent) on its home network, and a certain communication party (Correspondent Node:
CN), thereby ensuring packet data transmission and reception in the subnet 20.

Accordingly, packet data transmitted from a predetermined communication party to the MN 10 is transferred to the MN 10 through the AR 21 and the AP 23 based on the CoA of the MN 10, and packet data transmitted to a desired communication party by the MN 10 is transferred to the desired communication party through the AP 23 and the AR 21. Packet data which is addressed to the MN 10 and is transmitted to the home network is sent to the AR 21 of the subnet 20 based on the CoA of the MN 10 registered at the home agent, and is transferred to the MN 10 through the AP 23.

As mentioned above, the radio communication system using the mobile IPv6 and illustrated in FIG. 1 is structured in such a way that radio communication at the MN 10 continues by using the CoA even if the MN 10 performs handover from one subnet to another. As a technology which speeds up such a handover process, a fast handover technology disclosed in, for example, Non-patent Document 2 described below is known.

According to the fast handover technology, before the MN 10 performs L2 handover, the MN 10 preacquires a new (New) CoA (hereinafter called NCoA) which is used at the subnet 30, and notifies the AR 21 of the NCoA, so that a tunnel can be created between the AR 21 and the AR 31, and even during a period from the time when the MN 10 performs L2 handover to switch over connection from the AP 23 to AP 32, to the time when it moves to the subnet 30, and formally registers (BU) the NCoA preacquired, packet data transmitted to an old (Previous) CoA (hereinafter called PCoA) used in the subnet 20 is forwarded to the MN 10 through the AR 31 and the AP 32 via the tunnel, while packet data transmitted from the MN 10 arrives at the AR 21 through the AP 32 and the AR 31 via the tunnel, and is then transmitted to a communication party from the AR 21.

In a communication using a network, there are services including a QoS (Quality of Service) guarantee (in the specification, such a service is called additional service), and there are various communication protocols to realize the additional services. Among those various communication protocols, a protocol for performing QoS guarantee is, for example, RSVP (Resource Reservation Protocol) (see, for example, Non-patent Document 3 to be described later). The RSVP allows a band to be reserved over a path (flow) from a transmission side communication terminal which transmits data to a reception side communication terminal which receives data, thereby ensuring smooth data transmission from the transmission side communication terminal to the reception side communication terminal.

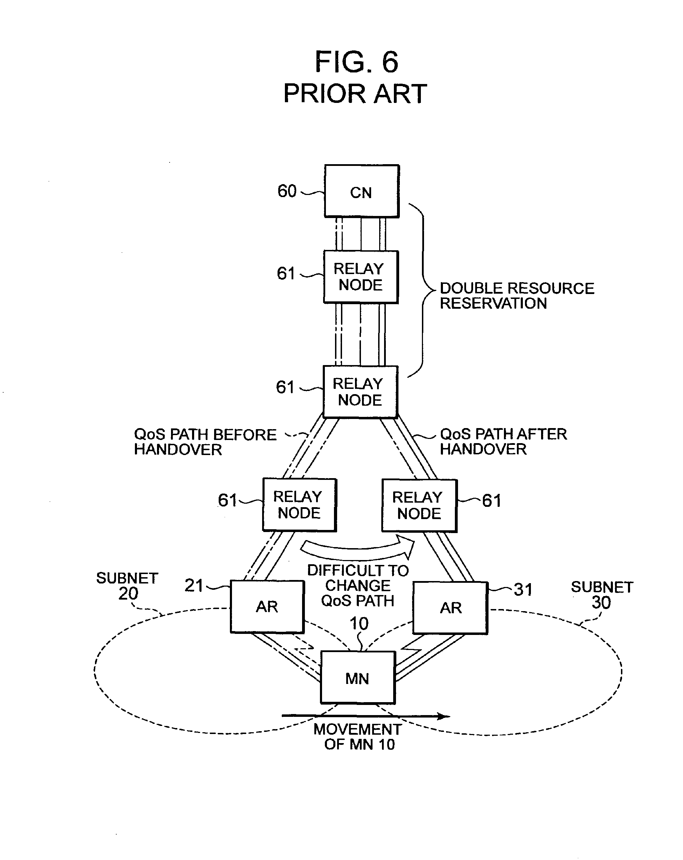

The MN 10 which performs handover between the subnets 20 and 30 is demanded to continuously get additional services, gotten before the handover, including the QoS guarantee after the handover, but the above-described RSVP cannot meet the above-described demand in terms of the following points, and cannot cope with the movement of the MN 10. FIG. 6 is an exemplary diagram for explaining that the RSVP of the conventional technology cannot cope with the movement of an MN.

According to the RSVP, a QoS path is set in an end-to-end path from a communication destination terminal (CN: Correspondent Node) 60 of the MN 10, and data transfer is carried out by a plurality of relay nodes 61 which connect the end-to-end path. Therefore, the MN 10 should perform handover between the subnets 20 and 30, and when the CoA of the MN 10 is changed, it is necessary to perform a process relating to address change in addition to changing the flow in the QoS path. However, the RSVP cannot cope with such a change, resulting in failure of the QoS guarantee (first problem: difficulty in changing a QoS path). Further, in a case where a new QoS path is set, when there is an overlapping portion of the QoS path before and after handover, there may occur double reservation in the overlapping portion (second problem; double reservation).

To overcome the problems, there are discussions on standardization of a new protocol called NSIS (Next Step in Signaling) in the IETF (Internet Engineering Task Force) are currently underway (see the following Non-Patent Document 4). The NSIS is expected to be effective particularly in various additional services including QoS guarantee, and there are documents describing the conditions for realizing QoS guarantee and mobility support in NSIS and how to realize them (e.g., see the following Non-Patent Documents 5 to 7). While NSIS coverages multifarious functions in an ordinary static network as well as under a mobile environment, attention is paid to the function of establishing a mobility-supported additional service, one of the NSIS functions, and implementation of NSIS achieves establishment of mobility-supported additional service.
Non-Patent Document 1: D. Johnson, C. Perkins and J. Arkko, "Mobility Support in IPv6", draft-ietf-mobileip-ipv6-24, June 2003
Non-Patent Document 2: Rajeev Koodli "Fast Handovers for Mobile IPv6", draft-ietf-mobileip-fast-mipv6-08, October 2003
Non-Patent Document 3: R. Braden, L. Zhang, S. Berson, S. Herzog and S. Jamin, "Resource Reservation Protocol-Version 1 Functional Specification", RFC 2205, September 1997.
Non-Patent Document 4: NSIS WG
   (http://www.ietf.org/html.charters/nsis-charter.html)
Non-Patent Document 5: H. Chaskar, Ed, "Requirements of a Quality of Service (QoS) Solution for Mobile IP", RFC3583. September 2003
Non-Patent Document 6: Sven Van den Bosch, Georgios Karagiannis and Andrew McDonald "NSLP for Quality-of-Service signalling", draft-ietf-nsis-qos-nslp-01.txt, October 2003
Non-Patent Document 7: X. Fu, H. Schulzrinne, H. Tschofenig, "Mobility issues in Next Step signaling", draft-fu-nsis-mobility-01.txt, October 2003

### DISCLOSURE OF THE INVENTION

### PROBLEMS TO BE SOLVED BY THE INVENTION

For example, let us consider that the MN 10 which is subject to QoS guarantee in the subnet 20 connected before handover performs handover to the subnet 30, and keeps getting QoS guarantee gotten before handover in the subnet 30 to connect with after handover.

In this case, the time from the point when the MN 10 executes handoff from the subnet 20 connected before handover to the point when the MN10 gets QoS guarantee in the subnet 30 to connect with after handover becomes the time where the MN 10 cannot get QoS guarantee, so that the MN 10 either gets no QoS guarantee at all or the default QoS transfer process is executed.

As mentioned above, therefore, the MN 10 after handover should be quickly provided with an additional service, but the current discussions on NSIS in the IETF have not given any specific proposal on the timing for initiation of an additional service after handover (e.g., timing to reconstruct a QoS path). While Non-patent document 5 describes that the number of packets to be subject to the default QoS transfer at the time of handover should be minimized, it discloses no specific solving means at all.

There may be a situation where an AR which has a mobility-supported additional service realizing function, such as NSIS, implemented, and an AR which does not both exist in a network. In such a network, a consideration should be given to prevention of, as much as possible, a wasteful increase in communication traffic, e.g., transmission of a message understandable only by an AR which has a mobility-supported additional service realizing function like NSIS implemented to an AR which has no mobility-supported additional service realizing function implemented.

In view of the above-described problems, it is an object of the present invention to provide a communication handover method and a communication message processing method, which can enable a mobile node that performs handover to promptly and continuously get an additional service gotten before handover even after the handover, and a program for executing these methods by use of a computer, and a communication system.

### MEANS FOR SOLVING THE PROBLEMS

To achieve the object, a communication handover method for use in a mobile node in a communication system in which a plurality of access routers each constituting a subnet are connected together over a communication network and at least one or more of access points forming a unique communication available area are connected to each of the plurality of access routers, the mobile node being so structured as to communicate with the access router connected with the access points, through radio communication with the access points within the communication available area, the communication handover method comprising:
a storing step of storing correspondence information describing a correspondence relationship between information on the access points and information on the access router connected to the access points into a predetermined information storage means of the mobile node;
a reception step of receiving information on another access point from the another access point when communication is switched over from an access point currently in communication to the another access point;
an acquisition step of acquiring information on that access router to which the another access point is connected from the correspondence information based on the information on the another access point received at the reception step;
a determination step of determining from the information on the access router acquired at the acquisition step whether or not changing address information currently assigned in connection of the subnet is necessary when communication is switched from the access point currently in communication to the another access point;
an address hold control step of performing such control as to continuously use the currently assigned address information upon determination that it is not necessary to change the address information at the determination step;
an address generation step of generating address information in the subnet constituted by the access router from the information on the access router acquired at the acquisition step upon determination that it is necessary to change the address information at the determination step; and
an address information transmission step of acquiring address information on the access router from the correspondence information, creating a message including the address information generated at the address generation step, and transmitting the message to the access router through the access point currently in communication.
   This structure permits a mobile node that performs handover to promptly and continuously get an additional service gotten before handover even after the handover.

Further, the communication handover method of the invention comprises a process switching step of performing a process based on conventional handover when the information on the access router to which the another access point is connected cannot be acquired from the correspondence information at the acquisition step.
The structure can ensure switching to a process by the conventional fast handover to surely perform a process associated with a handover when a mobile node cannot generate address information in a subnet from correspondence information or cannot acquire address information of an access router for transmitting a message to the access router.

Further, the communication handover method of the invention comprises:
a correspondence information reception step of receiving information relating to a change in the correspondence information from a predetermined communication apparatus which manages the correspondence information or the access router; and
a correspondence information update step of updating the correspondence information stored in the predetermined information storage means with the information relating to the change in the correspondence information.
   With the structure, when correspondence information is updated, a mobile node can receive the updated contents of the correspondence information, and can always hold latest correspondence information.

Further, the communication handover method of the invention comprises an information check step of periodically checking the predetermined communication apparatus or the access router to see whether or not there is information relating to a new change of the correspondence information.
The structure can allow a mobile node to dynamically check in a given cycle whether or not correspondence information has been updated.

Further, the communication handover method of the invention uses a link layer address of the access point as the information on the access point, and uses a link layer address of the access router, a prefix length of the subnet constituted by the access router, and an IP address of the access router as the information on the access router.
The structure can allow a mobile node to surely execute an efficient handover process, and improves the compatibility with a communication system using the fast handover technology of the mobile IPv6.

Further, in the communication handover method of the invention, the correspondence information describes a correspondence relationship between the information on the access point in the subnet to which the mobile node is currently connected, and the information on the access router, and a correspondence relationship between the information on the access point in the subnet present in a neighborhood of the subnet to which the mobile node is currently connected and the information on the access router.
With the structure, a mobile node can store only least necessary correspondence information, thus reducing the data capacity for correspondence information, and can relieve loads on a process of reading correspondence information, a search process for desired information, etc.

Further, the communication handover method of the invention is structured in such a way that the correspondence information describes whether or not an additional service early establishment function of realizing early establishment of a mobility supported additional service is implemented in the access router, and
in such a way as to determine whether or not, at the address information transmission step, the access router has the additional service early establishment function implemented therein, and transmit the message only to the access router having the additional service early establishment function implemented therein.
The structure can allow a mobile node to switch connection to a subnet capable of statelessly generating address information, and transmit a message only when an access router constituting the subnet has an additional service early establishment function, thereby reducing wasteful communication traffic.

Further, the communication handover method of the invention is structured in such a manner as to determine whether or not NSIS which enables early establishment of the mobility supported additional service is implemented in the access router.
The structure can allow a mobile node to determine whether an access router has NSIS implemented, and transmit a message to an access router which has NSIS implemented in addition to an additional service early establishment function, thereby reducing wasteful communication traffic.

Further, the communication handover method of the invention is structured in such a way that the additional service is a QoS guarantee.
The structure can allow a mobile node to determine whether an access router has is implemented with a function of starting a process of establishing a QoS path relating to QoS guarantee, and transmit a message only to an access router which is implemented with a function relating to QoS guarantee, thereby reducing wasteful communication traffic and promptly and continuously establishing QoS guarantee after handover in the mobile node.

The invention provides a communication handover program for allowing a computer to execute the above-descrigbed communication handover method.

To achieve the object, a communication message processing method according to the invention is for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is structured in such a manner as to communicate with the access router connected with the access points, through radio communication with the access points, and comprises:
a validity checking step of, when a message including address information in a subnet generated by the mobile node is received from the mobile node not in present in the subnet constituted by the access router, checking a validity of the address information included in the message; and
an additional service starting step of starting an establishment process of an additional service to the mobile node when it is checked that the address information is valid at the validity checking step.
   This structure can ensure reception of a message from a mobile node and confirmation of address information, as well as initiation of an additional service establishment function relating to the mobile node, and permits a mobile node that performs handover to promptly and continuously get an additional service gotten before handover even after the handover.

Further, in the communication message processing method of the invention, the access router has NSIS implemented which enables establishment of a mobility supported additional service.
This structure can ensure reception of a message from a mobile node and confirmation of address information, and allows an access router to start an additional service establishment function relating to the mobile node, so that the access router itself can perform an additional service establishment function relating to the mobile node by using NSIS.

Further, the communication message processing method is constructed in such a way that the additional service is a QoS guarantee.
This structure can ensure reception of a message from a mobile node and confirmation of address information, and allows an access router to start a process of establishing QoS guarantee relating to the mobile node by using the additional service early establishment function.

The invention provides a program for processing a communication message that allows a computer to execute the above-described communication message processing method.

To achieve the object, a communication system of the invention is structured in such a way that a plurality of access routers each constituting a subnet are connected together over a communication network and at least one or more of access points forming a unique communication available area are connected to each of the plurality of access routers, and a mobile node present in the communication available area communicates with the access router connected with the access points, through radio communication with the access points,
the mobile node has correspondence information storage means for storing correspondence information describing a correspondence relationship between information on the access points and information on the access router connected to the access points, and
when communication is switched over from an access point currently in communication to another access point, information on that access router to which the another access point is connected is acquired based on the information on the another access point received from the another access point by referring to the correspondence information, address information in the subnet constituted by the access router is generated from the acquired information on the access router and the address information in the subnet is transmitted to the access router through an access point currently in communication.
This structure permits a mobile node that performs handover to promptly and continuously get an additional service gotten before handover even after the handover.

Further, the communication system of the invention is structured in such a way as to execute a process by conventional handover when the mobile node cannot acquire the information on the access router to which the another access point is connected, from the correspondence information.
The structure can ensure switching to a process by the conventional fast handover to surely perform a process associated with a handover when a mobile node cannot generate address information in a subnet from correspondence information or cannot acquire address information of an access router for transmitting a message to the access router.

Further, the communication system of the invention is structured in such a way that a predetermined communication apparatus which manages the correspondence information is connected to the communication network, and is so structured as to transmit the correspondence information to the mobile node.
With this structure, a predetermined communication apparatus which is connected to the communication network and can grasp the network configuration manages correspondence information, and a mobile node has only to receive and store correspondence information transmitted from the predetermined communication apparatus.

Further, the communication system of the invention is structured in such a way that when a change in the information on the access point or the information on the access router occurs, the predetermined communication apparatus receives the information on the access point or the information on the access router after generation of the change, from the access router, updates the correspondence information managed by the predetermined communication apparatus, and informs the mobile node that the correspondence information has been changed.
With the structure, when correspondence information is updated, a mobile node can receive the updated contents of the correspondence information, and can always hold latest correspondence information.

### ADVANTAGEOUS EFFECT OF THE INVENTION

The invention provides a communication handover method and a communication message processing method, which have the above-described structures, and a program for executing these methods by use of a computer, and a communication system, and has an advantage such that a mobile node which performs handover can promptly and continuously get an additional service gotten before handover even after the handover.

### BRIEF DESCRIPTION OF THE DRAWINGS

[FIG. 1] An exemplary diagram showing the structure of a radio communication system common to the present invention and the prior art.
[FIG. 2] A block diagram showing the structure of an MN according to an embodiment of the invention.
[FIG. 3] An exemplary diagram showing one example of AP-AR correspondence information which is stored in an MN according to an embodiment of the invention.
[FIG. 4] A block diagram showing the structure of an AR which constitutes a subnet at the destination of handover by an MN according to the embodiment of the invention.
[FIG. 5] A sequence chart illustrating an operational example when an MN performs handover between subnets in a radio communication system according to the embodiment of the invention.
[FIG. 6] An exemplary diagram for explaining that an RSVP according to the prior art cannot cope with movement of an MN.

### BEST MODE FOR CARRYING OUT THE INVENTION

An embodiment of the invention will now be described with reference to FIGS. 1 to 5. FIG. 1 is an exemplary diagram showing the structure of a radio communication system common to the present invention and the prior art, and the structure of the radio communication system shown in FIG. 1 has been explained in the description of the prior art. The radio communication system shown in FIG. 1 is referred to in the description of the embodiment of the invention.

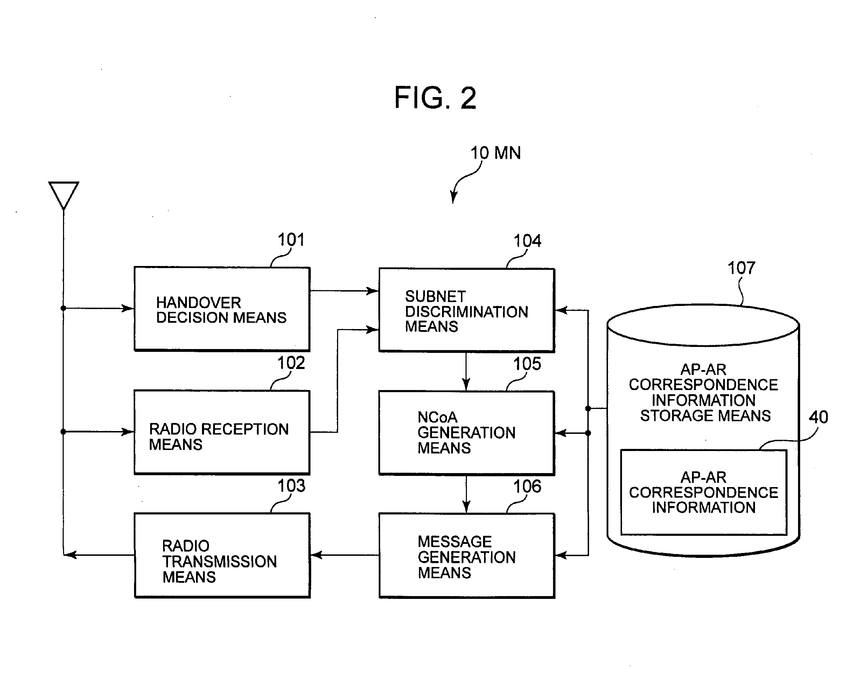

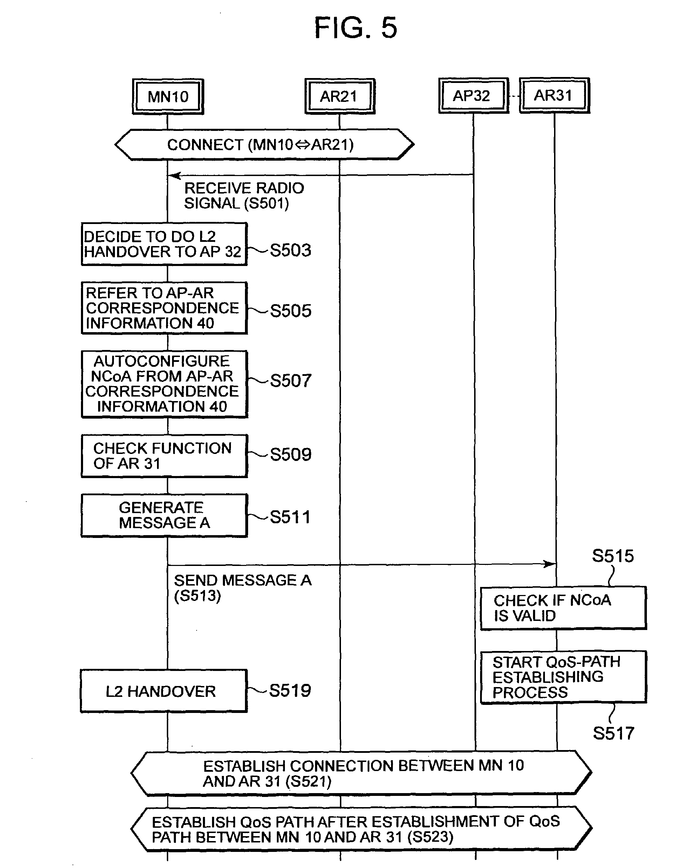

The function of the MN 10 will be explained next. FIG. 2 is a block diagram showing the structure of an MN according to the embodiment of the invention. While the individual functions of the MN 10 are illustrated in blocks in FIG. 2, the functions can be achieved by hardware and/or software. In particular, the main processes of the invention (processes in the individual steps illustrated in FIG. 5 to be discussed later) can be achieved by a computer program.

The MN 10 shown in FIG. 2 has handover decision means 101, radio reception means 102, radio transmission means 103, subnet discrimination means 104, NCoA generation means 105, message generation means 106, and AP-AR correspondence information storage means 107. The handover decision means 101 is means that determines initiation of an L2 handover based on an arbitrary condition, such as execution of an L2 handover to an AP having the highest radio signal strength (switching of connection of an AP of a correspondent node) by comparing, for example, the strengths of radio signals from different APs. The radio reception means 102 and the radio transmission means 103 are means for respectively performing data reception and data transmission by radio communication, and include various functions needed for radio communication.

When the handover decision means 101 is means for deciding to perform an L2 handover, the subnet discrimination means 104 discriminates whether the L2 handover is a handover to a different subnet, based on information described in AP-AR correspondence information 40 in the AP-AR correspondence information storage means 107 (e.g., information on the network prefix of a subnet), and the link layer address of the AP at the L2 handover destination.

The NCoA generation means 105 is means for statelessly configurating an NCoA which can match with a subnet constituted by an AR upper-level the AP at the L2 handover destination, based on information described in the AP-AR correspondence information 40 in the AP-AR correspondence information storage means 107 (e.g., information on the network prefix of a subnet), when the subnet discrimination means 104 discriminates that it is a handover to a different subnet.

The message generation means 106 is means for acquiring the IP address of an AR constituting a subnet at the handover destination referring to the information described in the AP-AR correspondence information 40 in the AP-AR correspondence information storage means 107, and generating a message having this IP address as the transmission destination and including at least the NCoA generated by the NCoA generation means 105.

The AP-AR correspondence information storage means 107 is means for storing the AP-AR correspondence information 40. The AP-AR correspondence information 40 can be referred to by the subnet discrimination means 104, the NCoA generation means 105, and the message generation means 106, as mentioned above, and includes the following information.

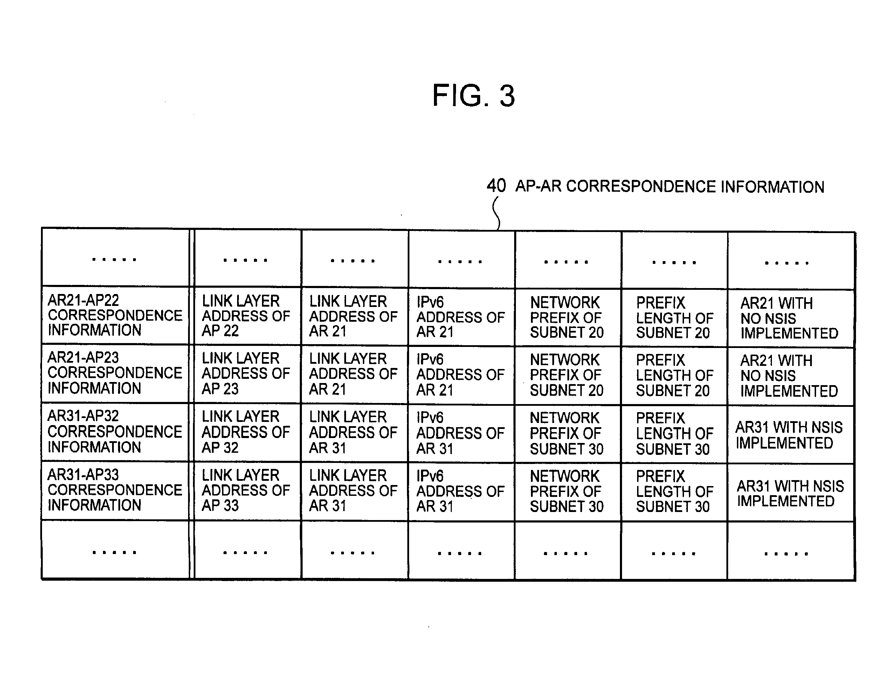

Referring to FIG. 3, information included in the AP-AR correspondence information 40 will be explained below. FIG. 3 is an exemplary diagram showing one example of AP-AR correspondence information which is stored in an MN according to an embodiment of the invention. As shown in FIG. 3, the AP-AR correspondence information 40 to be stored in the AP-AR correspondence information storage means 107 has information indicating the connection relationship between an AP and an AR (information indicating which AP is connected to which AR, i.e., information indicating which AP is under the control of each AR), the link layer address of each AP, the IPv6 address of each AR, a network prefix and a prefix length of a subnet to which each AR belongs, and information on the functions supported by each AR (e.g., information indicating whether or not NSIS is implemented). The network prefix of a subnet to which an AR belongs is information which can easily be acquired by combining the IPv6 address of the AR and the prefix length of the subnet. Although the network prefix of a subnet to which an AR belongs should not necessarily described in the AP-AR correspondence information 40, therefore, a description will also be given of a case where the network prefix of a subnet to which an AR belongs is described in the AP-AR correspondence information 40.

Correspondence information is set in the AP-AR correspondence information 40 shown in FIG. 3 for each connection of an AP and an AR, and in association with the link layer address of an AP, a set of the link layer address of an AR which has control over the AP, the IPv6 address of the AR which has control over the AP, the network prefix of a subnet of the AR having control over the AP, the prefix length of the subnet of the AR having control over the AP, and information on the functions supported by the AR is described in each correspondence information. With the structure of the AP-AR correspondence information 40, when the link layer address of an AP is known, for example, it is possible to refer to the link layer address of an AR which is at an upper level of the AP, and the network prefix and prefix length of a subnet to which the upper-level AR belongs by referring to individual cells laid out horizontally with a cell where the link layer address of the AP is described as a starting point. Accordingly, the NCoA generation means 105 can configure a CoA which can match with the subnet constituting an AR upper-level the AP based on local information present in the MN 10 without acquiring information from other nodes.

The MN 10 can grasp the IPv6 address of an AR upper-level the AP from the link layer address of the AP in a similar manner. Further, the MN 10 can refer to the functions supported by the AR. That is, the MN 10 can know the IPv6 address for transmission of packet data to the AR, what function the AR has (e.g., whether or not it has an additional service early establishment function (to be discussed later) according to the invention), etc., based on local information present in the MN 10 without acquiring information from other nodes.

The structure of the AP-AR correspondence information 40 shown in FIG. 3 is one example, and the AP-AR correspondence information 40 is not limited to this structure. Other information than the link layer address of an AP, the IPv6 address of an AR, the link layer address of the AR, the network prefix of a subnet, the prefix length of a subnet, information on other than the functions supported by the AR may be described in the AP-AR correspondence information 40. As information on the functions supported by the AR, information on various functions, such as whether or not a CoA statelessly configured by the MN 10 can be registered, whether or not to compatible with fast handover, and whether or not to compatible with context transfer which can ensure sharing of situations among nodes, can be described in addition to information on whether or not a mobility-supported additional service realizing function, such as NSIS, is implemented.

Although the AP-AR correspondence information 40 shown in FIG. 3 describes information relating to the connection relationship between an AR 21 and an AP 22 (AP22-AR21 correspondence information) in relation to the arrangement in FIG. 1, information relating to the connection relationship between an AR 21 and an AP 23 (AP23-AR21 correspondence information), information relating to the connection relationship between an AR 31 and an AP 32 (AP32-AR31 correspondence information), and information relating to the connection relationship between an AR 31 and an AP 33 (AP33-AR31 correspondence information), information relating to the connection relationship between an arbitrary AP and AR can be set for those information relating to the connection relationships. A method of holding the AP-AR correspondence information 40 in the MN 10 is also arbitrary. Under the local environment of the MN 10, for example, the AP-AR correspondence information 40 stored in a portable memory medium may be coped or moved into the MN 10, information relating to the connection relationship between the AR 21 and the AP 23 may be input directly by using operation means (a keyboard or a mouse or the like) of the MN 10, and saved as the AP-AR correspondence information 40. For example, the MN 10 can acquire the AP-AR correspondence information 40 over a communication network.

Particularly, it is expected that a mobile IPv6 network is used when services are carried out in a limited area by a company LAN (Local Area Network), a local autonomous community, a network provider or the like. In such a network system, the number of APs and ARs which are provided by each company, provider or the like is limited, it is possible to describe information relating to all the AP-AR connection relationships in the AP-AR correspondence information 40, and store the AP-AR correspondence information 40 in the AP-AR correspondence information storage means 107 beforehand.

When there are large numbers of APs and ARs, AP-AR correspondence information 40 describing only information relating to the AP-AR connection relationship in a subnet to which the MN 10 is currently connected, or information relating to the AP-AR connection relationship in a subnet located in the neighborhood (a subnet which is a possible target to which the subnet the MN 10 is currently connected to is to be changed) can be saved in the MN 10. In this case, as one example, the MN 10 may download only the necessary AP-AR correspondence information 40 from a predetermined communication apparatus (AP-AR correspondence information managing apparatus) provided by the provider of the connection service to the mobile IPv6 network, or may receive broadcast information including the necessary AP-AR correspondence information 40 from the AP-AR correspondence information managing apparatus.

An AR may be installed with the function of the AP-AR correspondence information managing apparatus. In this case, as the AR has executed a process of acquiring information relating to the AP-AR connection relationship in a neighboring subnet beforehand to generate AP-AR correspondence information 40, the MN 10 can acquire the AP-AR correspondence information 40 from the AR currently in connection.

When the AP-AR correspondence information managing apparatus manages AP-AR correspondence information, it is possible to cope with a dynamic change in network system. That is, even in a case where the contents of the AP-AR correspondence information 40 are changed, such as a case where information on the IPv6 address of an AR is changed, a case where a function supported by the AR is updated, or a case where an AP or AR has failed, or is newly added to the network, the MN 10 can flexibly cope with a dynamic change in network as the MN 10 periodically checks the AP-AR correspondence information 40 in the AP-AR correspondence information managing apparatus, or the AP-AR correspondence information managing apparatus notifies the MN 10 of update of the correspondence information, so that the MN 10 can always hold latest AP-AR correspondence information 40.

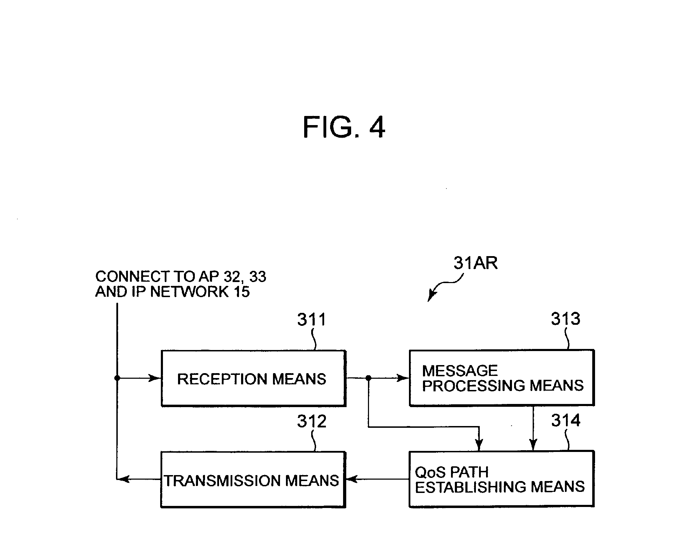

The functions of an AR (AR 31) to which the MN 10 is to be connected after handover will be described next. FIG. 4 is a block diagram showing the structure of an AR according to the embodiment of the invention. The individual functions of the AR 31 shown in FIG. 4, like those of the MN 10 shown in FIG. 2, can be achieved by hardware and/or software. In particular, the main processes of the invention (processes in the individual steps illustrated in FIG. 5 to be discussed later) can be achieved by a computer program.

The AR 31 shown in FIG. 4 has reception means 311, transmission means 312, message processing means 313, and QoS path establishing means 314. The reception means 311 and the transmission means 312 are connected to APs 32, 33 which are under the control of the AR 31, and an IP network 15 which is an external network, and respectively perform data reception and data transmission.

The message processing means 313 is means for processing a message when the reception means 311 receives the message generated by the message generation means 106 of the MN 10. Specific processes to be executed by the message processing means 313 include, for example, checking of the validity of an NCoA included in the message (checking if it is usable by the subnet 30 constituted by the AR 31). When the validity of the NCoA is acknowledged, the message processing means 313 requests the QoS path establishing means 314 to establish a QoS path relating the MN 10 which is expected to move to the subnet 30.

The QoS path establishing means 314 is means capable of starting a process of changing the QoS path of the MN 10 by some method (e.g., a method which is expected by be defined by NSIS) upon reception of a request to establish the QoS path relating to the MN 10 from the message processing means 313. Although the AR 31 has the QoS path establishing means 314 capable of performing QoS guarantee, one of additional services, in an example given here, the QoS path establishing means 314 can be expanded to means that can realize an arbitrary additional service to be supported by, for example, the NSIS. The QoS path establishing means 314 is means capable of starting a process of changing the QoS path of the MN 10, and should not itself necessarily have a function of changing the QoS path of the MN 10. That is, upon reception of a request to establish a QoS path relating to the MN 10 from the message processing means 313, the QoS path establishing means 314 may request other nodes having a function of changing the QoS path of the MN 10 to start the process of changing the QoS path of the MN 10.

As described above, the AR 31 shown in FIG. 4 is configured in such a way that upon reception of a message generated by the message generation means 106 of the MN 10 (a message including at least an NCoA configured by the MN 10), the AR 31 checks the NCoA, and triggered by the reception of the message, the QoS path establishing means 314 starts establishment of the QoS path of the MN 10. The function of starting a process of establishing an additional service relating to the MN 10 with reception of a predetermined message from the MN 10 as a trigger is called an additional service early establishment function.

Referring to a sequence chart in FIG. 5, a description will be given of the operation in a case where the MN 10 shown in FIG. 2 stores the AP-AR correspondence information 40 shown in FIG. 3 in the AP-AR correspondence information storage means 107, and performs handover to the subnet 30 from the subnet 20. While the AR 31 needs to have the additional service early establishment function as mentioned above, it is premised hereinafter that the AR 31 has an additional service realizing function capable of establishing an additional service relating to the MN 10 itself in addition to the additional service early establishment function. Hereinafter, QoS guarantee will be explained as one example of additional services, and it is premised that the AR 31 is implemented with a mobility-supported QoS-path establishment function, such as NSIS (hereinafter called mobility QoS function).

FIG. 5 is a sequence chart illustrating an operational example when an MN performs handover between subnets in the radio communication system according to the embodiment of the invention. The sequence chart shown in FIG. 5 shows, along the time axis, individual processes of the MN 10, the AR 21, and the AR 31, which perform handover from the subnet 20 to the subnet 30 when the MN 10 moves into a radio coverage area 34 formed by the AP 32 from within a radio coverage area 25 formed by the AP 23, passing through an overlap area 26, in the radio communication system shown in FIG. 1.

First, the initial state is set wherein the MN 10 shown in FIG. 2 is present in the radio coverage area 25, and is connected to the AR 21 via the AP 23. When the radio signal from the AP 23 currently in communication becomes weaker with the movement in the radio coverage area 25, the MN 10 starts searching for another communicatable AP. When it enters the overlap area 26 where the radio coverage area 25 overlaps the radio coverage area 34 (the hatched area in FIG. 1), it becomes possible to listen to the radio wave (radio signal) from the AP 32 (step S501: receive a radio signal), i.e., it finds the AP 32. It is to be noted that in the overlap area 26 the can listen to both the radio signal from the AP 23 and the radio signal from the AP 32.

Then, when the handover decision means 101 of the MN 10 compares the strength of the radio signal from the AP 23 with the strength of the radio signal from the AP 32, and finds out that the radio signal from the AP 32 is stronger, for example, it decides to switch connection of the AP at the transmission destination (L2 handover) (step S503: decide to do L2 handover to AP 32). In the embodiment, the condition for deciding execution of an L2 handover has been explained as the use of the result of comparison of radio signal strengths by the handover decision means 101, the condition is not limited, and execution of an L2 handover may be determined based on another condition.

When the handover decision means 101 decides to perform an L2 handover, the handover decision means 101 supplies the subnet discrimination means 104 with a request to refer to the AP-AR correspondence information 40. Meanwhile, the subnet discrimination means 104 receives the link layer address of the AP 32 acquired from a beacon or the like received from the AP 32, searches the AP-AR correspondence information 40 for the link layer address of the AP 32 referring to the AP-AR correspondence information storage means 107 (step S505: refer to AP-AR correspondence information 40), and acquires information on the AR 31 associated with the link layer address of the AP 32.

Then, the subnet discrimination means 104 discriminates whether or not the L2 handover from the AP 23 to the AP 32 will cause handover to a different subnet by referring to, for example, the network prefix of the subnet 30 associated with the link layer address of the AP 32 at the L2 handover destination. When it is determined that the L2 handover from the AP 23 to the AP 32 is to be carried out between different subnets, the MN 10 performs processes at and following step S507. When it is determined that the L2 handover from the AP 23 to the AP 32 is to be carried out within the same subnet, the MN 10 does not perform the processes at and following step S507, but performs only an L2 handover and keeps using the CoA currently in use.

The subnet discrimination means 104, which grasps that the L2 handover from the AP 23 to the AP 32 is a handover between different subnets (handover from the subnet 20 to the subnet 30), requests the NCoA generation means 105 to configure an NCoA. The NCoA generation means 105 combines the network prefix and prefix length of the subnet 30 associated with the link layer address of the AP 32 in the AP-AR correspondence information 40 and the link layer address of the MN 10 to configure an NCoA which matches with the subnet constituted by the AR 31 (step S507: autoconfigure NCoA from AP-AR correspondence information 40). It is to be noted that, as mentioned above, it is possible to acquire the network prefix of the subnet 30 constituted by the AR 31 by combining the IPv6 address of the AR 31 and the prefix length of the subnet 30, and configure an NCoA using the network prefix of the subnet 30. The NCoA generation means 105 supplies the message generation means 106 with the NCoA configured at step S507 together with a request to generate a predetermined message (hereinafter called message A).

The message generation means 106 having received the request to generate the message A from the NCoA generation means 105 first discriminates whether the AR 31 upper-level the AP 32 at the handover destination has a mobility QoS function, such as NSIS (step S509: check function of AR 31), and proceeds to step S511 when the AR 31 has the mobility QoS function. Although it is premised that as mentioned above, the AR 31 upper-level the AP 32 at the handover destination of the MN 10 has a mobility QoS function, it is desirable that generation of the message A at step S511 to be discussed later should not be performed when the AR 31 does not have a mobility QoS function. In this case, the MN 10 can switch the process to a process defined by the conventional fast handover technique, or inform the AR 21 of the NCoA configured at step S507. Although it is checked if the AR 31 has the mobility QoS function after configuration of an NCoA in FIG. 5, it is also possible to make the checking before configuration of an NCoA (e.g., the subnet discrimination means 104 checks it).

After checking that the AR 31 has the mobility QoS function, the message generation means 106 acquires the IP address of the AR 31 held in association with the link layer address of the AP 32 in the AP-AR correspondence information 40, and generates the message A addressed to the IP address of the AR 31 including at least the NCoA configured at step S507 (step S511: generate message A). Then, as the MN 10 sends the message A to the AP 23 by radio communication, the message is transferred from the MN 10 to the AR 31 via the AP 23, the AR 21 and the IP network 15 (step S513: send message A).

The AR 31 having received the message A from the MN 10 checks if the NCoA included in the message A is valid (step S515: check if NCoA is valid) in the message processing means 313. When it is determined that the NCoA is valid at this time, the AR 31 performs a registration process of assigning the NCoA to the MN 10, and requests the QoS path establishing means 314 to establish the QoS path of the MN 10. When it is determined that the NCoA is not valid, it is desirable to send a message notifying that the NCoA is not valid to the MN 10.

The QoS path establishing means 314, which has received the request to establish the QoS path of the MN 10 from the message processing means 313, starts alteration of the QoS path of the MN 10 (step S517: start QoS-path establishing process). As the method relating to alteration of the QoS path, an arbitrary method can be used; for example, NSIS or methods defined by other protocols are available.

For example, the following method is possible as one example of the QoS-path establishing process. First, the AR 31 utilizes NSIS to change a QoS path between the AR 21 and a CN 60 in a QoS path before handover set in the MN 10 (e.g., the QoS path before handover between the MN 10 and the CN 60 shown in FIG. 6), and establish the QoS path between the AR 31 and the CN 60. Meanwhile, the MN 10 performs an L2 handover from the AP 23 to the AP 32 at an arbitrary timing after transmission of the message A (step S519: L2 handover), and further through a predetermined process, the handover is completed and connection between the MN 10 and the AR 31 is established (step S521: establish connection between MN 10 and AR 31), after which the QoS path between the MN 10 and the AR 31 is established, and is combined with the previously-established QoS path between the AR 21 and the CN 60 to establish the QoS path between the MN 10 and the CN 60 (step S523: establish QoS path after establishment of QoS path between MN 10 and AR 31). Accordingly, QoS guarantee set in the MN 10 before handover can be given promptly after handover, making it possible to minimize the number of packets to be subject to the default QoS transfer process or make it zero.

Another possible example of the QoS-path establishing process is a method of, first, changing a QoS path between an arbitrary node (node having a mobility QoS function) present on a QoS path between the MN 10 and the CN 60 which has been established before handover and the AR 21, to a QoS path between the arbitrary node and the AR 31, then establishing a QoS path between the MN 10 and the AR 31. In this case, as the MN 10 describes the IPv6 address of the arbitrary node (particularly, the node having mobility QoS function on the QoS path and in the vicinity of the MN 10) or the like in the message A, for example, the AR 31 having received the message A can grasp the IPv6 address of the arbitrary node and can request the arbitrary node to establish the QoS path.

The timing at which the AR 31 starts the process of establishing the QoS path at step S517 depends on the timing at which the MN 10 sends the message A at step S513, not on the timing at which the MN 10 performs an L2 handover at step S519. In the method mentioned as one example of the QoS-path establishing process, before establishment of a QoS path between the AR 21 and the CN 60, the MN 10 may perform an L2 handover to establish connection between the MN 10 and the AR 31. In this case, after the QoS path between the MN 10 and the AR 21 is established first, the QoS path between the AR 21 and the CN 60 is established, and the QoS path between the MN 10 and the CN 60 is established. However, the message A to be sent to the AR 31 from the MN 10 serves as a message to request the AR 31 to start the QoS-path establishing process, and nonetheless the AR 31 can start the QoS-path establishing process at an early stage of the handover operation of the MN 10, i.e., the number of packets to be subject to the default QoS transfer process can be minimized.

According to the embodiment of the invention, as described above, as the MN 10 autoconfigure the NCoA of the subnet 30 constituted by the AR 31 which has the AP 32 under control by referring to the AP-AR correspondence information 40 stored in the AP-AR correspondence information storage means 107 immediately after determining the AP 32 to which an L2 handover is to be performed, and sends the NCoA to the AR 31 directly, the AR 31 can check the NCoA configured in a stateless manner by the MN 10 at an early stage of the handover operation of the MN 10, and can start a process of establishing various additional services including QoS guarantee. As a result, even after handover, the MN 10 can promptly and continuously get the additional service that has been gotten before handover. The MN 10 can precheck the function of the AR 31 to which the message A is to be sent, and determine whether or not the message A is to be sent to the AR 31, thereby making it possible to prevent a wasteful increase in communication traffic and a wasteful increase in processing load, such as sending the message A to a message A-unaware AR.

In a case where the MN 10 is connected to an AR which uses only the stateful CoA allocation system, an NCoA generated by the MN 10 does not match a subnet to which that AR belongs. With regard to, particularly, information on the AR which uses only the stateful CoA allocation system and on an AP which is under the control of the AR, therefore, it is desirable that they should not be described in the AP-AR correspondence information 40, or should clarify that only the stateful CoA allocation system is adopted as the function of the AR. Accordingly, with regard to the AR which uses only the stateful CoA allocation system, the MN 10 can acquire a CoA allocated in a stateful manner by performing, for example, the processes by the conventional fast handover.

In the sequence chart shown in FIG. 5, the AR 31 has an additional service realizing function such as NSIS in addition to the additional service early establishment function, and the AR 31 itself establishes a new QoS path relating to the MN 10. However, the AR 31 may request other nodes having an additional service realizing function to start a process of changing the QoS path of the MN 10. In this case, likewise, a process of establishing various additional services relating to the MN 10 is started at an early stage of the handover operation of the MN 10.

### INDUSTRIAL APPLICABILITY

The communication handover method, the communication message processing method, and the program for executing these methods by use of a computer, and a communication system, according to the invention, can allow a mobile node which performs handover to promptly and continuously get an additional service gotten before handover even after the handover, are applied to the technical field relating to the handover of a mobile node which performs radio communication, and more particularly, are applicable to a technical field relating to the handover of a mobile node which performs radio communication using the mobile IPv6 protocol that is the next generation Internet protocol.

## Claims

1. A communication handover method for use in a mobile node in a communication system in which a plurality of access routers each constituting a subnet are connected together over a communication network and at least one or more of access points forming a unique communication available area are connected to each of the plurality of access routers, the mobile node being so structured as to communicate with the access router connected with the access points, through radio communication with the access points within the communication available area, the communication handover method comprising:
a storing step of storing correspondence information describing a correspondence relationship between information on the access points and information on the access router connected to the access points into a predetermined information storage means of the mobile node;
a reception step of receiving information on another access point from the another access point when communication is switched over from an access point currently in communication to the another access point;
an acquisition step of acquiring information on that access router to which the another access point is connected from the correspondence information based on the information on the another access point received at the reception step;
a determination step of determining from the information on the access router acquired at the acquisition step whether or not changing address information currently assigned in connection of the subnet is necessary when communication is switched from the access point currently in communication to the another access point;
an address hold control step of performing such control as to continuously use the currently assigned address information upon determination that it is not necessary to change the address information at the determination step;
an address generation step of generating address information in the subnet constituted by the access router from the information on the access router acquired at the acquisition step upon determination that it is necessary to change the address information at the determination step; and
an address information transmission step of acquiring address information on the access router from the correspondence information, creating a message including the address information generated at the address generation step, and transmitting the message to the access router through the access point currently in communication.

2. The communication handover method according to claim 1, comprising a process switching step of performing a process based on conventional handover when the information on the access router to which the another access point is connected cannot be acquired from the correspondence information at the acquisition step.

3. The communication handover method according to claim 1, comprising:
a correspondence information reception step of receiving information relating to a change in the correspondence information from a predetermined communication apparatus which manages the correspondence information or the access router; and
a correspondence information update step of updating the correspondence information stored in the predetermined information storage means with the information relating to the change in the correspondence information.

4. The communication handover method according to claim 3, comprising an information check step of periodically checking the predetermined communication apparatus or the access router to see whether or not there is information relating to a new change of the correspondence information.

5. The communication handover method according to claim 1, wherein a link layer address of the access point is used as the information on the access point, and a link layer address of the access router, a prefix length of the subnet constituted by the access router, and an IP address of the access router are used as the information on the access router.

6. The communication handover method according to claim 1, wherein the correspondence information describes a correspondence relationship between the information on the access point in the subnet to which the mobile node is currently connected, and the information on the access router, and a correspondence relationship between the information on the access point in the subnet present in a neighborhood of the subnet to which the mobile node is currently connected and the information on the access router.

7. The communication handover method according to claim 1, structured in such a way that the correspondence information describes whether or not an additional service early establishment function of realizing early establishment of a mobility supported additional service is implemented in the access router, and
in such a way as to determine whether or not, at the address information transmission step, the access router has the additional service early establishment function implemented therein, and transmit the message only to the access router having the additional service early establishment function implemented therein.

8. The communication handover method according to claim 7, structured in such a manner as to determine whether or not NSIS which enables early establishment of the mobility supported additional service is implementerd in the access router.

9. The communication handover method according to claim 7 or 8, wherein the additional service is a QoS guarantee.

10. A communication handover program for allowing a computer to execute the communication handover method as recited in claim 1.

11. A communication message processing method for use in at least one of a plurality of access routers in a communication system in which the plurality of access routers each constituting a subnet are connected together over a communication network, at least one or more of access points forming a unique communication available area are connected to each of the plurality of access routers, and a mobile node present in the communication available area is structured in such a manner as to communicate with the access router connected with the access points, through radio communication with the access points, the communication message processing method comprising:
a validity checking step of, when a message including address information in a subnet generated by the mobile node is received from the mobile node not in present in the subnet constituted by the access router, checking a validity of the address information included in the message; and
an additional service starting step of starting an establishment process of an additional service to the mobile node when it is checked that the address information is valid at the validity checking step.

12. The communication message processing method according to claim 11, wherein the access router has NSIS implemented which enables establishment of a mobility supported additional service.

13. The communication message processing method according to claim 11 or 12, wherein the additional service is a QoS guarantee.

14. A program for processing a communication message that allows a computer to execute the communication message processing method according to claim 11.

15. A communication system structured in such a way that a plurality of access routers each constituting a subnet are connected together over a communication network and at least one or more of access points forming a unique communication available area are connected to each of the plurality of access routers, and a mobile node present in the communication available area communicates with the access router connected with the access points, through radio communication with the access points,
the mobile node has correspondence information storage means for storing correspondence information describing a correspondence relationship between information on the access points and information on the access router connected to the access points, and
when communication is switched over from an access point currently in communication to another access point, information on that access router to which the another access point is connected is acquired based on the information on the another access point received from the another access point by referring to the correspondence information, address information in the subnet constituted by the access router is generated from the acquired information on the access router and the address information in the subnet is transmitted to the access router through an access point currently in communication.

16. The communication system according to claim 15, structured in such a way as to execute a process by conventional handover when the mobile node cannot acquire the information on the access router to which the another access point is connected, from the correspondence information.

17. The communication system according to claim 15 or 16, structured in such a way that a predetermined communication apparatus which manages the correspondence information is connected to the communication network and and is so structured as to transmit the correspondence information to the mobile node.

18. The communication system according to claim 15, structured in such a way that when a change in the information on the access point or the information on the access router occurs, the predetermined communication apparatus receives the information on the access point or the information on the access router after generation of the change, from the access router, updates the correspondence information managed by the predetermined communication apparatus, and informs the mobile node that the correspondence information has been changed.
